# EUROPEAN PATENT SPECIFICATION

(11) **EP 3 943 904 B1**
(45) Date of publication and mention of the grant of the patent: **29.01.2025**
(21) Application number: 21203632.1
(22) Date of filing: 20.10.2021
(51) Int. Cl.: G01L 9/00, G01L 19/06, G01L 19/14

(54) **PRESSURE SENSOR APPARATUS**
DRUCKSENSORVORRICHTUNG
APPAREIL DE CAPTEUR DE PRESSION

(43) Date of publication of application: 26.01.2022
(73) Proprietor: Melexis Technologies NV, 3980 Tessenderlo (BE)
(72) Inventor: CLAESEN, Karel, 3980 Tessenderlo (BE); OTTE, Laurent, 3980 Tessenderlo (BE)
(74) Representative: Kay, Ross Marcel

(56) References cited:
- EP-A2- 2 657 669
- DE-A1- 10 216 019
- DE-U1- 29 506 494

## Description

The present invention relates to pressure sensor apparatus that is located within a pressure sensing module comprising a pressure port.

In the field of pressure sensors, it is known to provide a packaged pressure sensor device. The pressure sensor device typically comprises a pressure sensing element and a lead frame contained within an overmoulded device package. The device package comprises an interfacing region carrying a circumferential wall on an externally facing surface for abutment with a port of pressure sensing module into which the pressure sensor device is to be installed.

In addition to the port mentioned above, the pressure sensing module comprises a lead frame and an optional lid, the lead frame of the pressure sensor device being electrically connected to the lead frame of the pressure sensing module. Optionally, although typically used, a potting compound is disposed within a housing of the pressure sensing module over the electrically connected lead frames of the pressure sensor device and the pressure sensing module. However, the potting compound can spill over a rear side of the interfacing region into the port of the pressure sensing module. Furthermore, the pressure sensor device, when a Printed Circuit Board (PCB)-less device, does not support the direct measurement of differential pressure while being sufficiently flexible for measurement of absolute or relative gauge pressure.

US patent no. 9,366,593 discloses a pressure sensor device carrying a circumferential wall or ridge as described above. However, whilst the circumferential wall provides an adequate seal with a pressure port of a pressure sensing module for some applications, the seal can be further improved. DE 295 06 494 U1 discloses a generally conically-shaped housing for a pressure sensor structure contained within an internal cavity capped by a corrugated lid. EP 2 657 669 A2 discloses a partially overmoulded lead frame, the overmoulding structure providing a cavity to contain an integrated circuit, the cavity being closed by a lid. DE 102 16 109 A1 discloses a housing body defining a pressure detection room containing a protective gel disposed over a pressure sensor structure. The housing body comprises a groove to capture excess protective gel introduced into the pressure detection room prior to closing the pressure detection room with a cap.

According to a first aspect of the present invention, as defined in claim 1, there is provided a pressure sensor module comprising a body portion, the body portion comprising a pressure port and an annular recess surrounding an opening of the pressure port; and a pressure sensor apparatus disposed within the housing; wherein the pressure sensor apparatus comprises: a pressure sensitive structure; a device package comprising a profiled interface region, the profiled interface region comprising a front side and a back side; and a lead frame encapsulated at least in part by the device package and operably coupled to the pressure sensitive structure; wherein the front side is configured to abut sealingly, when in use, against an opposing surface to dock directly with the pressure port; the back side comprises a first surrounding ridge structure and a second surrounding ridge structure; the profiled interface region comprises an aperture for providing access to the pressure port; and the front side of the profiled region comprises a third surrounding ridge structure adhered at least in part in the annular recess by an adhesive to secure the pressure sensor apparatus to the pressure port and to mate sealingly the front side of the profiled interface region against the pressure port.

The first surrounding ridge structure may be formed from the same material as the device package.

The second surrounding ridge structure may be formed from the same material as the device package.

The first and/or second surrounding ridge structure may be integrally formed with the device package.

The first surrounding ridge structure may be configured as a first loop. The second surrounding ridge structure may be configured as a second loop.

The first surrounding ridge structure may be circular. The second surrounding ridge structure may be circular.

The first surrounding ridge structure and the second surrounding ridge structure may be concentric.

The first surrounding ridge structure may encircle the aperture.

The profiled interface region may comprise a base surface; the first surrounding ridge structure and the second surrounding ridge structure may extend away from the base surface, and the first surrounding ridge structure may extend further than the second surrounding ridge structure.

The profiled interface region may be an overmoulded profile interface region.

The pressure sensitive structure may comprise a deformable membrane in fluid communication with the aperture.

The apparatus may further comprise: a pressure communication conduit having a first end operably coupled to the back side of the profiled interface region for providing fluid communication with another pressure port of the pressure sensor module.

The pressure sensitive structure may be off-axis with respect to the device package.

The body portion may comprise a channel surrounding the pressure port; the third surrounding ridge structure may be adhered at least in part within the channel.

The housing may further comprise a lid portion. The lid portion may comprise a pressure communication region.

The pressure communication region may be a port. The port may be protected by a membrane.

The body portion may further comprise another pressure port.

The another pressure port may be in fluid communication with the back side of the profiled interface region.

The another pressure port may be surrounded by another channel; a second end of the pressure communication conduit may be adhered at least in part in the another channel.

The module may further comprise: a baffle wall between the pressure port and the another pressure port.

The baffle wall may be configured to impede the potting compound from entering the another pressure port.

The module may further comprise a potting compound disposed in the body portion and surrounding the second ridge structure without contacting the first ridge structure.

The housing may further comprise the lid portion and the pressure communication conduit may be integrally formed with the lid portion of the housing.

The module may further comprise another pressure sensor apparatus disposed therein; the another pressure sensor apparatus may comprise: another pressure sensitive structure; another lead frame operably coupled to the another pressure sensitive structure; and another device package comprising another profiled interface region, the another profiled interface region comprising another front side and another back side; wherein the another front side may be configured to abut sealingly, when in use, against another opposing surface of the body portion, thereby directly docking with the another pressure port; and the another profiled interface region may comprise another aperture for providing access to the another pressure port.

The another back side may comprise another first surrounding ridge structure and another second surrounding ridge structure.

It is thus possible to provide an apparatus that is relatively simple to manufacture whilst providing an improved seal with a pressure port of a pressure sensing module. In this regard, the seal is capable of efficiently seal against leakage of harsh fluids that can be corrosive, for example halogens, such as Iodine, urea, ammonia and so-called AdBlue. Furthermore, the provision of first and second surrounding ridge structures improves resilience from potting or coating compound reaching the pressure sensing structure and thereby hindering performance of the pressure sensing structure. The provision of adhesive further improves the seal in some embodiments, the adhesive being advantageously contained by the provision of the first and second surrounding ridge structures. The use of adhesive also permits the apparatus to be formed from a common material, thereby reducing manufacturing complexity and cost.

At least one embodiment of the invention will now be described, by way of example only, with reference to the accompanying drawings, in which:
**Figure 1** is an plan view of a pressure sensor apparatus constituting an embodiment of the invention;
**Figure 2** is a cross-sectional view along line A-A of the apparatus of Figure 1;
**Figures 3** is a schematic cross-sectional view of the pressure sensor of Figure 1 incorporated into a pressure sensor module and constituting another embodiment of the invention;
**Figure 4** is a schematic cross-sectional view of a modification to the pressure sensor module of Figure 3 and constituting another embodiment of the invention;
**Figure 5** is a schematic cross-sectional view of the pressure sensor of Figure 1 incorporated into a dual port pressure sensor module and constituting yet another embodiment of the invention;
**Figure 6** is a schematic cross-sectional view of the dual port pressure sensor module of Figure 5 comprising a port coupling conduit and constituting a further embodiment of the invention;
**Figure 7** is a schematic cross-sectional view of an alternative configuration to the dual port pressure sensor module of Figure 5 comprising the port coupling conduit and constituting yet a further embodiment of the invention;
**Figure 8** is a schematic cross-sectional view of a pair of the pressure sensors of Figure 1 incorporated into the dual port pressure sensor module of Figure 5 and constituting another embodiment of the invention; and
**Figure 9** is a schematic cross-sectional view of a modification to the dual port pressure sensor module of Figure 8 and constituting a further embodiment of the invention.

Throughout the following description, identical reference numerals will be used to identify like parts.

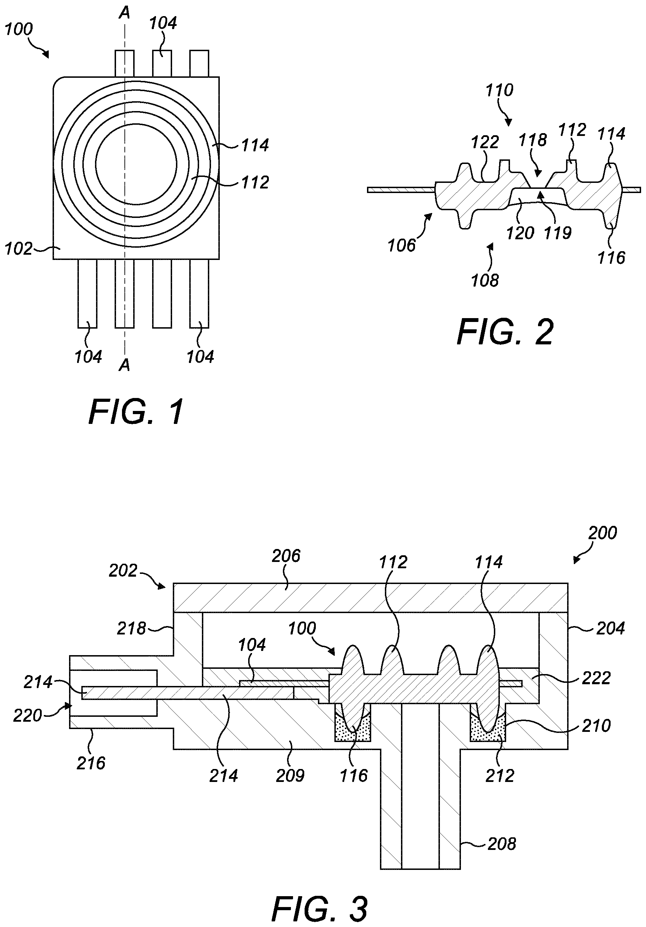

Referring to Figure 1, a pressure sensor apparatus 100 comprises a device package 102 formed by, for example, moulding, and leads 104 of a lead frame shown partially exposed as some of the lead frame is encapsulated in the moulding of the device package 102.

The device package 102 comprises a pressure sensitive structure (not shown), and the lead frame is operably coupled to the pressure sensitive structure. In some examples, one or more passive electrical components (not shown) can be operably coupled to the lead frame beneath the moulding. Typically, the pressure sensitive structure can be, for example, a MEMS structure comprising a pressure sensitive membrane overlying a close cavity in a substrate. Electrical tracks are made to one or more devices, for example piezoresistors, formed on or around the membrane. The pressure sensitive structure can be configured for absolute or relative pressure sensing depending upon the application for which the pressure sensitive structure is required. In other examples, capacitive pressure sensing devices can be formed on or around the membrane. The electrical tracks are operably coupled to the leads frame, optionally through an intermediary interface circuit that can be integrated with the MEMS structure or can be independent of the MEMS structure.

The device package 102 also comprises a profiled interface region 106 (Figure 2) having a front side 108 and a back side 110, the profile interface region 106 being overmoulded in this example. The front side 108 of the profiled interface region 106 is shaped, and hence configured, to abut against an opposing surface (not shown) for direct docking with a pressure port of a pressure sensor module, more details of which will be described later below.

The back side 110 of the profiled interface region 106 comprises a first surrounding ridge structure 112 and a second surrounding ridge structure 114. The first surrounding ridge structure 112 is, in this example formed from the same material as the device package 102. Similarly, the second surrounding ridge structure 114 is, in this example, formed from the same material as the device package 102. In this example, the first surrounding ridge structure 112 and the second surrounding ridge structure 114 are integrally formed with the device package 102.

The first surrounding ridge structure 112 is arranged as a first loop, for example a circular loop. Similarly, the second surrounding ridge structure 114 is arranged as a second loop, for example a circular loop. However, the skilled person should appreciate that other shaped loops can be employed.

Additionally, the first and second surrounding ridge structures 112, 114 are concentric with respect to each other and substantially centred around an aperture 118 described later herein. In this regard, the first surrounding ridge structure 112 encircles the aperture 118.

In some examples, the pressure sensitive structure can be off-axis with respect to a central axis of the device package 102. In such examples, the first and second surrounding ridge structures 112, 114 can still surround the aperture 118, but are not concentric with the aperture 118.

The device package 102 provides a base surface 122 for the profiled interface region 106, and the first surrounding ridge structure 112 and the second surrounding ridge structure 114 respectively extend away from the base surface 122. In this example, the first surrounding ridge structure 112 extends further than the second surrounding ridge structure 114, i.e. the first surrounding ridge structure 112 extends further away from the base surface 122 than the second surrounding ridge structure 114. Each of the ridges can have a height of between about 0.3mm and 3mm, for example about 1mm. The first surrounding ridge structure 112 can be up to about three times taller than the second surrounding ridge structure 114. In this example, the first and second surrounding ridges 112, 114 have rounded extremities, but the distal surfaces of the first and second surrounding ridges 112, 114 can be of any suitable profile.

The front side 108 comprises a third surrounding ridge 116. The profiled interface region 106 also has the aperture 118 for providing access to the pressure port of the pressure sensor module (described later herein). In this example, the pressure sensitive structure comprises a deformable membrane 119 that closes the aperture 118. A layer of gel 120 overlies the deformable membrane 119 from the front side 108.

Turning to Figure 3, the pressure sensor module 200 mentioned above comprises the pressure sensor apparatus 100. The pressure sensor module 200 comprises a housing 202 having a body portion 204 and a lid 206, the body portion 204 defining an open chamber that is closed by the lid 206. The body portion 204 of the housing 202 comprises a pressure port 208 disposed at a base 209 of the body portion 204, the pressure sensor apparatus 100 overlying an opening of the pressure port 208. As such, the pressure sensor apparatus 100 is disposed within the housing 202. The front side 108 of the profiled interface region 106 is sealingly mated against the pressure port 208.

In order to accommodate and receive the third surrounding ridge 116 of the device package 102, the body portion 204 comprises an annular recess or channel 210 surrounding the opening of the pressure port 208. The device package 102 and hence the pressure sensor apparatus 100 is secured to the pressure port 208 by way of the third surrounding ridge 116 extending, at least in part, into the annular channel 210 following deposition of an adhesive 212 into the annular channel 210 so that the third surrounding ridge structure 116 is adhered, at least in part, in the annular channel 210. The leads 104 extend away from the device package 102 and overlie a module lead frame 214 and are operably coupled to the module lead frame 214, for example by welds. In this example, the body portion 204 comprises an outwardly extending peripheral wall 216 extending away from a side wall 218 of the body portion 204 and defining a connector aperture 220. The module lead frame 214 extends through the side wall 218 of the body portion 204 and into the connector aperture 220 for connection to external electronic circuitry. A potting or coating compound 222 surrounds the lead frame of the pressure sensor apparatus 100 and the module lead frame 214. The potting compound 222 can be optionally provided.

The first and second surrounding ridges 112, 114 serve to prevent ingress of the potting compound 222 into pressure port 208. Indeed, once deposited, the potting compound 222 surrounds the second surrounding ridge 214 without contacting the first surrounding ridge 212.

In this example, the lid 206 is attached to the body portion 204 by welding. However, the lid 206 can be attached to the body portion 204 using other techniques, for example the application of adhesive or mechanical clamping. In some examples, the attachment of the lid 206 to the body portion 204 can provide a hermetic seal.

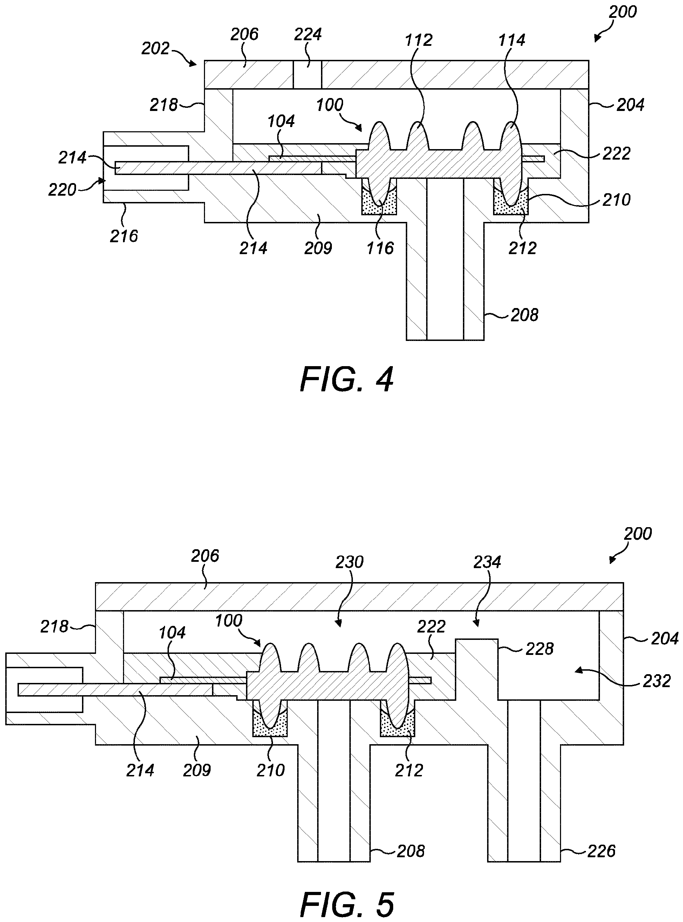

The above pressure sensor module 200 measures absolute pressure. In this regard, the membrane 119 of the pressure sensor apparatus 100 is only responsive (directly or indirectly) to pressure at the front side 108 of the pressure sensor apparatus 100. In another example, to measure relative pressure, the membrane 119 of the pressure sensor apparatus 100 is responsive (directly or indirectly) to pressure at both the front and back sides of the pressure sensor apparatus 100. To support such relative pressure sensing, the lid 206 is provided with an ambient aperture or port 224 (Figure 4), constituting a pressure communication region, to allow the back side 110 of the pressure sensor apparatus 100 access to atmospheric pressure. In another example, the ambient aperture 224 can be provided in the body portion 204 instead of in the lid 206. In another example, the ambient aperture 224 can be closed by a protective membrane (not shown) so as to create a barrier to, for example, moisture from entering the chamber of the housing 202.

In another example (Figure 5), the pressure sensor module 200 is a differential pressure sensor and comprises a first pressure port 208 as in the previous examples, and a second pressure port 226, the second pressure port 226 being spaced from the first pressure port 208. In this regard, the first and second pressure ports 208, 226 are at the base 209 of the body portion 204 and separated from each other by a partition or baffle wall 228 to impede the potting compound 222, once deposited, from entering the second pressure port 226. The pressure sensor apparatus 100 is a differential pressure sensor and overlies the first pressure port 208. In order to provide differential pressure sensing, as in the embodiment of Figure 4, the membrane 119 of the pressure sensor apparatus 100 is responsive (directly or indirectly) to pressure at both the front and back sides of the pressure sensor apparatus 100. The chamber of the housing 200 comprises a first internal region 230 and a second internal region 232, the first internal region 230 being to a first side of the partition wall 228 and comprising the first pressure port 208, and the second internal region 232 being to a second side of the partition wall 228 and comprising the second pressure port 226.

As in the previous examples, the lid 206 is attached to the body portion 204 hermetically, a clearance 234 between the partition wall 228 and an underside of the lid 206 providing access between the first and second internal regions 230, 232. In this example, the lid 206 does not comprise the ambient aperture 224 of the previous example. The potting or coating compound 222 is contained within the first internal region 230 by virtue of the partition wall 234 and the remaining peripheral side wall, including the side wall 218, of the body portion 204.

By virtue of the clearance 234, the first internal region 230 is in fluid communication with the second internal region 232 and thus the back side 110 of the pressure sensor apparatus 100 is in fluid communication with the second pressure port 226.

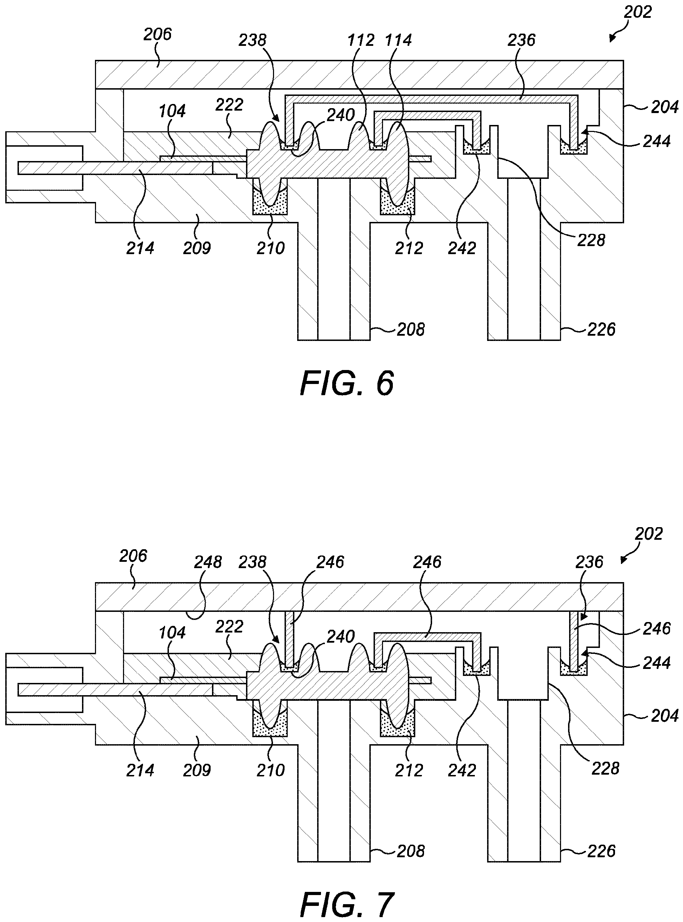

Referring to Figure 6, in another example, another differential pressure sensor module structure comprises an internal conduit 236, constituting a pressure communication conduit, that has an inverted substantial U-shape. In this example, a first end 238 of the internal conduit 236 is shaped to correspond to a first channel 240 between the first and second surrounding ridge structures 112, 114, which in this example is annular. The diameter of the first end 238 of the internal conduit 236 corresponds to the diameter of the first channel 240. The first end 238 of the internal conduit 236 is thus circular and is adhered in place in the first channel 240 by an adhesive.

In this example, the partition wall 228 of the previous example surrounds the second pressure port 226 and comprises a second channel 242 formed in the upper end of the partition wall 228. A second end 244 of the internal conduit 236 is shaped to correspond to the second channel 242, which in this example is annular. The diameter of the second end 244 of the internal conduit 236 corresponds to the diameter of the second channel 242. The second end 244 of the internal conduit 236 is thus circular and is adhered in place in the second channel 242 by an adhesive. The provision of the internal conduit 236 therefore obviates the need to seal hermetically the lid 206 to the body portion 204. As in the previous example, the membrane 119 of the pressure sensor apparatus 100 is responsive (directly or indirectly) to pressure at both the front and back sides of the pressure sensor apparatus 100.

Turning to Figure 7, instead of providing the internal conduit 236 as a separate piece part of the pressure sensor module 200, in another example, the internal conduit 236 is integrally formed with the lid 206, conduit side walls 246 extending from the lid 206 to form the internal conduit 206, an underside surface 248 of the lid 206 forming part of a wall structure of the internal conduit 236. In such an example, the first and second ends 238, 244 of the internal conduit 236 respectively cooperate with and are adhered, at least in part, in the first and second channels 240, 242 in the same manner as described above in relation to the example of Figure 6.

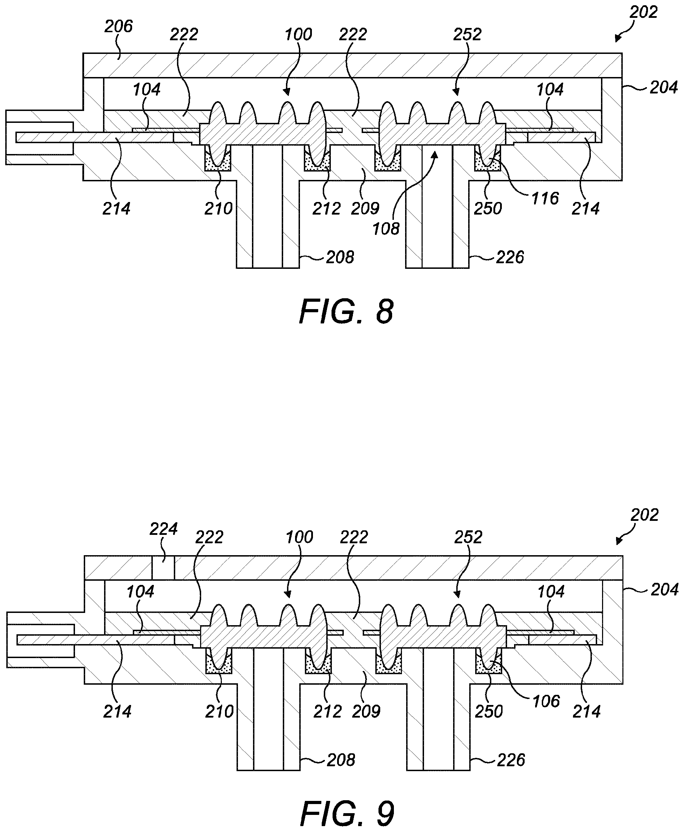

Referring to Figure 8, in another example, the second pressure port 226 is provided as in the example of Figure 5. However, the partition wall 228 is absent and, instead, the base 209 of the body portion 204 comprises an additional annular channel 250 that surrounds the second pressure port 226. An additional pressure sensor apparatus 252 of the same kind as the pressure sensor apparatus 100 is also provided and overlies the second pressure port 226 so that the front side 108 of the additional pressure sensor apparatus 252 abuts an opening of the second pressure port 226. In this example, the pressure sensor 100 and the additional pressure sensor apparatus 252 are absolute pressure sensors and so are only responsive (directly or indirectly) respectively to pressure at the front sides 108 of the pressure sensor apparatus 100 and the additional pressure sensor apparatus 252.

The device package 102 of the additional pressure sensor apparatus 252 and hence the additional pressure sensor apparatus 252 is secured to the second pressure port 226 by way of the third surrounding ridge 116 of the additional pressure sensor apparatus 252 extending into the additional annular channel 250 following deposition of an adhesive 212 into the additional annular channel 250. In this example, the leads 104 of the additional pressure sensor apparatus 252 requiring electrical connection extend away from the device package 102 in a direction opposite to corresponding leads 104 of the pressure sensor apparatus 100. However, in other examples, the leads 104 can extend differently than described above. The leads 104 of the additional pressure sensor apparatus 252 requiring electrical connection overlie another portion of the module lead frame 214 internal to the pressure sensor module 200 and are operably coupled to the module lead frame 214, for example by welds. The potting or coating compound 222 surrounds the lead frames 104 of the pressure sensor apparatus 100, the additional pressure sensor apparatus 252 and the module lead frame 214. The potting compound 222 can be optionally provided.

As in the previous examples, the first and second surrounding ridges 112, 114 of the pressure sensor apparatus 100 of the additional pressure sensor apparatus 252 serve to prevent ingress of the potting compound 222 into the corresponding pressure ports 208 of the pressure sensor apparatus 100 and the additional pressure sensor apparatus 252. Indeed, once deposited, the potting compound 222 surrounds the second surrounding ridge 214 without contacting substantially the first surrounding ridge 212.

In this example, the lid 206 closes the open body portion 204 and is attached to the body portion 204 and optionally forms a hermetic seal in a like manner to the pressure sensor module of Figure 5, i.e. the lid 206 does not comprise an aperture. However, in other examples (Figure 9) the lid 206 can comprise an ambient aperture 224, optionally closed by a protective membrane (not shown). In such examples, the pressure sensor apparatus 100 and the additional pressure sensor apparatus 252 are relative pressure sensor apparatus and so are respectively responsive (directly or indirectly) to pressure at both the front and back sides of the pressure sensor apparatus 100 and the additional pressure sensor apparatus 252. However, the skilled person should appreciate that, in other examples, the additional pressure sensor apparatus 252 can be of a different kind to the pressure sensor apparatus 100. In this regard, the pressure sensor module 200 can comprise only relative pressure sensors or a combination of relative and absolute pressure sensors.

The skilled person should appreciate that the above-described implementations are merely examples of the various implementations that are conceivable within the scope of the appended claims. Indeed, it should be appreciated that although in the above examples the pressure sensitive structure is centred with respect to the device package 102, in other examples the pressure sensor apparatus 100 and/or the additional pressure sensor apparatus 252 can be disposed off-axis with respect to the device package 102.

## Claims

1. A pressure sensor module comprising:
a housing (202) comprising a body portion (204), the body portion (204) comprising a pressure port (208) and an annular recess (210) surrounding an opening of the pressure port (208); and
a pressure sensor apparatus (100) disposed within the housing (202); wherein the pressure sensor apparatus (100) comprises:
a pressure sensitive structure;
a device package (102) comprising a profiled interface region (106), the profiled interface region (106) comprising a front side (108) and a back side (110); and
a lead frame (104) encapsulated at least in part by the device package (102) and operably coupled to the pressure sensitive structure; wherein
the front side (108) sealingly abuts against an opposing surface to dock directly with the pressure port (208);
the back side (110) comprises a first surrounding ridge structure (112);
the profiled interface region (106) comprises an aperture (118) for providing access to the pressure port (208);
and
the front side (108) of the profiled interface region (106) comprises a third surrounding ridge structure (116) adhered at least in part in the annular recess (210) by an adhesive (212) to secure the pressure sensor apparatus (100) to the pressure port (208) and to mate sealingly the front side (108) of the profiled interface region (106) against the pressure port (208).
**characterized in that** the back side (110) further comprises a second surrounding ridge structure (114).

2. An apparatus as claimed in Claim 1, wherein the first surrounding ridge structure (112) and the second surrounding ridge structure (114) are concentric.

3. An apparatus as claimed in Claim 1 or Claim 2, wherein the first surrounding ridge structure (112) encircles the aperture (118).

4. An apparatus as claimed in any one of the preceding claims, wherein the profiled interface region (106) comprises a base surface (122), the first surrounding ridge structure (112) and the second surrounding ridge structure (114) extending away from the base surface (122), and the first surrounding ridge structure (112) extends further than the second surrounding ridge structure (114).

5. An apparatus as claimed in any one of the preceding claims, wherein the profiled interface region (106) is an overmoulded profile interface region.

6. An apparatus as claimed in any one of the preceding claims, wherein the pressure sensitive structure comprises a deformable membrane in fluid communication with the aperture (118).

7. An apparatus as claimed in any one of the preceding claims, further comprising:
a pressure communication conduit (236) having a first end operably coupled to the back side (110) of the profiled interface region (106) for providing fluid communication with another pressure port (226) of the pressure sensor module (200).

8. A module as claimed in Claim 1, wherein the housing (202) further comprises a lid portion (206).

9. A module as claimed in Claim 1, wherein
the body portion (204) further comprises another pressure port (226).

10. A module as claims in Claim 9, further comprising:
a baffle wall (228) between the pressure port (208) and the another pressure port (226).

11. A module as claimed in Claim 1, further comprising a potting compound (222) disposed in the body portion (204) and surrounding the second ridge structure (104) without contacting the first ridge structure (112).

12. A module as claimed in Claim 7, wherein
the housing (202) further comprises a lid portion (206); and
the pressure communication conduit (236) is integrally formed with the lid portion (206) of the housing (202).

13. A module as claimed in Claim 10, when dependent upon any one of Claims 1 to 6 or 8, further comprising another pressure sensor apparatus (252) disposed therein, the another pressure sensor apparatus (252) comprising:
another pressure sensitive structure;
another lead frame operably coupled to the another pressure sensitive structure; and
another device package comprising another profiled interface region, the another profiled interface region comprising another front side and another back side; wherein
the another front side is configured to abut sealingly, when in use, against another opposing surface of the body portion, thereby directly docking with the another pressure port (226); and
the another profiled interface region comprises another aperture for providing access to the another pressure port (226).

## Patentansprüche

1. Drucksensormodul, umfassend:
ein Gehäuse (202) aufweisend ein Körperabschnitt (204), wobei der Körperabschnitt (204) einen Druckanschluss (208) und eine ringförmige Aussparung (210) umfasst, die eine Öffnung des Druckanschlusses (208) umgibt; und
eine Drucksensorvorrichtung (100), die innerhalb des Gehäuses (202) angeordnet ist, wobei die Drucksensorvorrichtung (100) umfasst:
eine druckempfindliche Struktur;
ein Vorrichtungspaket (102), das einen profilierten Grenzflächenbereich (106) umfasst, wobei der profilierte Grenzflächenbereich (106) eine Vorderseite (108) und eine Rückseite (110) umfasst; und
einen Leiterrahmen (104), der zumindest teilweise vom Vorrichtungspaket (102) eingekapselt und operativ an der druckempfindlichen Struktur gekoppelt ist; wobei die Vorderseite (108) abdichtend an einer gegenüberliegenden Fläche anliegt, um direkt an den Druckanschluss (208) anzudocken;
die Rückseite (110) eine erste umgebende Stegstruktur (112) aufweist;
der profilierte Grenzflächenbereich (106) eine Öffnung (118) aufweist, um Zugang zu dem Druckanschluss (208) zu schaffen;
und
die Vorderseite (108) des profilierten Grenzflächenbereichs (106) eine dritte umlaufende Stegstruktur (116) aufweist, die zumindest teilweise in der ringförmigen Aussparung (210) durch einen Klebstoff (212) angeklebt ist, um die Drucksensorvorrichtung (100) an dem Druckanschluss (208) zu befestigen und die Vorderseite (108) des profilierten Grenzflächenbereichs (106) abdichtend an den Druckanschluss (208) anzupassen, **dadurch gekennzeichnet, dass** die Rückseite (110) ferner eine zweite umgebende Stegstruktur (114) umfasst.

2. Vorrichtung nach Anspruch 1, wobei die erste umgebende Stegstruktur (112) und die zweite umgebende Stegstruktur (114) konzentrisch sind.

3. Vorrichtung nach Anspruch 1 oder 2, wobei die erste umgebende Stegstruktur (112) die Öffnung (118) umgibt.

4. Vorrichtung nach einem der vorhergehenden Ansprüche, wobei der profilierte Grenzflächenbereich (106) eine Grundfläche (122) aufweist, die erste umlaufende Stegstruktur (112) und die zweite umlaufende Stegstruktur (114) sich von der Grundfläche (122) weg erstrecken, und die erste umlaufende Stegstruktur (112) sich weiter erstreckt als die zweite umlaufende Stegstruktur (114).

5. Vorrichtung nach einem der vorhergehenden Ansprüche, wobei der profilierte Grenzflächenbereich (106) ein umspritzter Profilgrenzflächenbereich ist.

6. Vorrichtung nach einem der vorhergehenden Ansprüche, wobei die druckempfindliche Struktur eine verformbare Membran in Fluidverbindung mit der Öffnung (118) umfasst.

7. Vorrichtung nach einem der vorhergehenden Ansprüche, ferner umfassend:
eine Druckverbindungsleitung (236) mit einem ersten Ende, das operativ an der Rückseite (110) des profilierten Grenzflächenbereichs (106) gekoppelt ist, um eine Fluidverbindung mit einem anderen Druckanschluss (226) des Drucksensormoduls (200) herzustellen.

8. Modul nach Anspruch 1, wobei das Gehäuse (202) ferner einen Deckelabschnitt (206) umfasst.

9. Modul nach Anspruch 1, wobei
der Körperabschnitt (204) ferner einen anderen Druckanschluss (226) umfasst.

10. Modul nach Anspruch 9, ferner umfassend:
eine Umlenkwand (228) zwischen dem Druckanschluss (208) und dem anderen Druckanschluss (226).

11. Modul nach Anspruch 1, ferner umfassend eine Vergussmasse (222), die im Körperabschnitt (204) angeordnet ist und die zweite Stegstruktur (104) umgibt, ohne die erste Stegstruktur (112) zu berühren.

12. Modul nach Anspruch 7, wobei
das Gehäuse (202) ferner einen Deckelabschnitt (206) umfasst; und
die Druckverbindungsleitung (236) einstückig mit dem Deckelabschnitt (206) des Gehäuses (202) ausgebildet ist.

13. Modul nach Anspruch 10, wenn es von einem der Ansprüche 1 bis 6 oder 8 abhängt, ferner umfassend eine andere Drucksensorvorrichtung (252), die darin angeordnet ist, wobei die andere Drucksensorvorrichtung (252) umfasst:
eine andere druckempfindliche Struktur;
einen anderen Leiterrahmen, der operativ an der anderen druckempfindlichen Struktur gekoppelt ist; und
ein anderes Vorrichtungspaket, das einen anderen profilierten Grenzflächenbereich umfasst, wobei der andere profilierte Grenzflächenbereich eine andere Vorderseite und eine andere Rückseite umfasst; wobei
die andere Vorderseite so konfiguriert ist, dass sie im Gebrauch abdichtend an einer anderen gegenüberliegenden Oberfläche des Körperteils anliegt, wodurch sie direkt an den anderen Druckanschluss (226) angedockt wird; und
der andere profilierte Grenzflächenbereich eine andere Öffnung umfasst, um Zugang zu dem anderen Druckanschluss (226) zu schaffen.

## Revendications

1. Un module de capteur de pression comprenant :
un boîtier (202) comprenant une partie de corps (204), la partie de corps (204) comprenant un orifice de pression (208) et un évidement annulaire (210) entourant une ouverture de l'orifice de pression (208) ; et
un appareil capteur de pression (100) disposé à l'intérieur du boîtier (202) ;
dans lequel l'appareil capteur de pression (100) comprend :
une structure sensible à la pression ;
un boîtier de dispositif (102) comprenant une région d'interface profilée (106), la région d'interface profilée (106) présentant une face avant (108) et une face arrière (110) ; et
une grille de connexion (104) encapsulée au moins en partie dans le boîtier de dispositif (102) et couplée de manière opérationnelle à la structure sensible à la pression ; dans laquelle
la face avant (108) vient en butée de manière étanche contre une surface opposée pour s'arrimer directement à l'orifice de pression (208) ;
la face arrière (110) comprend une première structure de crête environnante (112) ;
la région d'interface profilée (106) comprend une ouverture (118) permettant d'accéder à l'orifice de pression (208) ;
et
la face avant (108) de la région d'interface profilée (106) comprend une troisième structure de crête environnante (116) collée au moins en partie dans l'évidement annulaire (210) par un adhésif (212) pour fixer l'appareil capteur de pression (100) à l'orifice de pression (208) et pour accoupler de manière étanche la face avant (108) de la région d'interface profilée (106) à l'orifice de pression (208).
**caractérisé en ce que** la face arrière (110) comprend en outre une deuxième structure de crête environnante (114).

2. Un appareil selon la Revendication 1, dans lequel la première structure de crête environnante (112) et la deuxième structure de crête environnante (114) sont concentriques.

3. Un appareil selon la Revendication 1 ou la Revendication 2, dans lequel la première structure de crête environnante (112) entoure l'ouverture (118).

4. Un appareil selon l'une quelconque des revendications précédentes, dans lequel la région d'interface profilée (106) comprend une surface de base (122), la première structure de crête environnante (112) et la deuxième structure de crête environnante (114) s'étendant à l'écart de la surface de base (122), et la première structure de crête environnante (112) s'étend plus loin que la deuxième structure de crête environnante (114).

5. Un appareil selon l'une quelconque des revendications précédentes, dans lequel la région d'interface profilée (106) est une région d'interface profilée surmoulée.

6. Un appareil selon l'une quelconque des revendications précédentes, dans lequel la structure sensible à la pression comprend une membrane déformable en communication fluidique avec l'ouverture (118).

7. Un appareil selon l'une quelconque des revendications précédentes, comprenant en outre :
un conduit de communication de pression (236) ayant une première extrémité couplée de manière opérationnelle à la face arrière (110) de la région d'interface profilée (106) pour assurer une communication fluidique avec un autre orifice de pression (226) du module de capteur de pression (200).

8. Un module selon la Revendication 1, dans lequel le boîtier (202) comprend en outre une partie de couvercle (206).

9. Un module selon la Revendication 1, dans lequel
la partie de corps (204) comprend en outre un autre orifice de pression (226).

10. Un module selon la Revendication 9, comprenant en outre :
une paroi déflectrice (228) entre l'orifice de pression (208) et l'autre orifice de pression (226).

11. Un module selon la Revendication 1, comprenant en outre un composé d'enrobage (222) disposé dans la partie de corps (204) et entourant la deuxième structure de crête (104) sans entrer en contact avec la première structure de crête (112).

12. Un module selon la Revendication 7, dans lequel
le boîtier (202) comprend en outre une partie de couvercle (206) ; et
le conduit de communication de pression (236) est formé d'un seul tenant avec la partie de couvercle (206) du boîtier (202).

13. Un module selon la Revendication 10, lorsqu'il dépend de l'une quelconque des Revendications 1 à 6 ou 8, comprenant en outre un autre appareil capteur de pression (252) disposé à l'intérieur, l'autre appareil capteur de pression (252) comprenant :
une autre structure sensible à la pression ;
une autre grille de connexion couplée de manière opérationnelle à l'autre structure sensible à la pression ; et
un autre boîtier de dispositif comprenant une autre région d'interface profilée, l'autre région d'interface profilée comprenant une autre face avant et une autre face arrière ; dans lequel
l'autre face avant est configurée pour venir en butée de manière étanche, lors de l'utilisation, contre une autre surface opposée de la partie de corps, s'arrimant ainsi directement à l'autre orifice de pression (226) ; et
l'autre région d'interface profilée comprend une autre ouverture permettant d'accéder à l'autre orifice de pression (226).
